(19) Europäisches Patentamt

European Patent Office

Office européen des brevets

(11) **EP 4 312 001 A1**

(12) **EUROPEAN PATENT APPLICATION**

(43) Date of publication:
**31.01.2024 Bulletin 2024/05**

(21) Application number: **22187335.9**

(22) Date of filing: **27.07.2022**

(51) International Patent Classification (IPC):
**G01C 21/16** [(2006.01)]     **G01C 25/00** [(2006.01)]

(52) Cooperative Patent Classification (CPC):
**G01C 21/16; G01C 25/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mimetik UG**
**01219 Dresden (DE)**

(72) Inventors:
- **SEFUNC, Merve**
  **01219 Dresden (DE)**
- **RADAK, Hristina**
  **01219 Dresden (DE)**

(74) Representative: **Raffay & Fleck**
**Patentanwälte**
**Grosse Bleichen 8**
**20354 Hamburg (DE)**

(54) **METHOD FOR IMU MARG ORIENTATION ESTIMATION BASED ON QUATERNION DUAL DERIVATIVE DESCENT**

(57)     The invention is related to calculate an orientation estimate based on an IMU MARG sensor. It is known to use such combined sensor setup to determine an orientation.

From Madgwick it is known to fuse IMU and MARG with only one calculation step per sample by adapting the weight factor $\mu$ based on the rate of orientation change measured by gyroscope and the fusion weighting parameter beta based on the maximum gyroscope measurement error of each axis.

The invention addresses the task to find a better solution to this task, especially one that converges fast but does not overshoot and requires less calculation resources.

The invention is closely related to Madgwick and amends Madgwick by continuously adjusting the weight factors according to specific scheme.

Fig. 1

EP 4 312 001 A1

**Description**

The invention is related to calculating an orientation estimate based on an IMU MARG sensor. It is known to use such combined sensor setup to determine an orientation.

It is known from US 2011 /0307213 A1 and US 2016/0327396 A1 to use quaternion-variables for IMU and MARG fusion by Kalman filters or by complicated comparisons and decisions regarding fusion. Gloves featuring such sensors are known from DE 10 2015 111 506 A1, US 9,529.433 B2 and US 2016/0266645 A1.

From "Estimation of IMU and MARG orientation using a gradient descent algorithm", Sebastian O.H. Madgwick, Andrew J.L. Harrison, Ravi Vaidyanathan, IEEE 978-1-4244-9862-8/11, Rehab Week Zurich, ETH Zurich Science City, Switzerland, June 29 - July 1, 2011, referred to by Madgwick, it is known to fuse IMU and MARG with only one calculation step per sample by adapting the weight factor $\mu$ based on the rate of orientation change measured by gyroscope and the fusion weighting parameter beta based on the maximum gyroscope measurement error of each axis. They further mention application of such in aerospace, robotics, navigation, human motion analysis, machine interaction and rehabilitation.

"Formulation of a new gradient descent MARG orientation algorithm: Case study on robot teleoperation", Samuel Wilson, Henry Eberle, Yoshikatsu Hayashi, Sebastian O.H. Madgwick, discuss the problem of a two gradient descent method when gradients are not decoupled, discuss means for decoupling them by amending them prior to using them and show that first 0.2 s are sufficient to classify a gesture.

From "Improved Formulation of the IMU and MARG Orientation Gradient Descent Algorithm for Motion Tracking in Human-Machine Interfaces", Marcel Admiraal, Samuel Wilson, Ravi Vaidyanathan, IEEE 978-1-5090-6064-1/17, 2017 IEEE International Conference on Multisensor Fusion and Integration for Intelligent Systems (MFI 2017) November 16 - 18, 2017, Daegu, Korea it is known to optimise the calculation of the gradient to find a direction of a steepest descent for the two-step gradient descent method based on complex algebra and setting weight factor alpha to a fixed value in a specified range.

From "Quaternion Gradient and Hessian", Dongpo Xu, Danilo P. Mandic, arXiv:1406.3587v1 [math.NA] 13 Jun 2014, it is known to calculate quaternion derivatives.

The invention addresses the task to find a better solution to this task, especially one that converges fast but does not overshoot and requires less calculation resources.

The invention is closely related to Madgwick, which is hereby included by reference, but does develop it further to improve convergence and overshoot while attempting to reach a convergence equal or greater than the physical rate of change of orientation.

This is solved by a Method for IMU sensor data fusion for determining an orientation featuring:

Providing an assumed orientation quaternion (e.g. (1,0,0,0)) and a first initial weight factor and a second initial weight factor,

providing a sequence of gyroscope data showing angular rate (Sw) as angular rate quaternions,

providing a sequence of accelerometer data, especially gravitometer data, as accelerometer quaternions and a sequence of magnetometer data as magnetometer quaternions,

calculating a quaternion derivative of the angular rate, describing rate of change of the earth frame relative to the sensor frame,

e.g. like this in the notation of Madgwick

$$^{S}\omega = \begin{bmatrix} 0 & \omega_x & \omega_y & \omega_z \end{bmatrix}$$

$$^{S}_{E}\dot{q} = \frac{1}{2}{}^{S}_{E}\hat{q} \otimes {}^{S}\omega$$

,

integrating quaternion derivative of the angular rate,

repeatedly determining an updated assumed orientation quaternion by solving the optimization problem to align assumed orientation quaternion with accelerometer quaternions and magnetometer quaternions by dual gradient descent method featuring:

    i. performing one first step for the first accelerometer quaternion and magnetometer quaternion as known from Madgwick.

The first step is constituted by one first accelerometer step with the first initial weight factor for the first accelerometer quaternion and one first magnetometer step with the second initial weight factor for the first magnetometer quaternion as known from Madgwick.

The invention amends Madgwick further by continuously adjusting the weight factors.

This might be archived by:

    ii. if angular rate and/or angular rate quaternion length is not above a predefined threshold increasing the first weight factor or setting it to a predefined high value if the last accelerometer step reduced the value of an accelerometer cost function defined based on the difference between assumed orientation quaternion after last accelerometer step or assumed orientation quaternion after later of step i and iv on the one hand and last next or the next accelerometer quaternion on the other hand and decreasing it if the value of the accelerometer cost function was increased by the last accelerometer step

    iii. for a next magnetometer quaternion adapting the second weight factor by increasing it or setting it to a predefined high value if the last magnetometer step reduced the value of a magnetometer cost function defined based on the difference between assumed orientation quaternion after last magnetometer step or assumed orientation quaternion after later of step i and iv on the hand and last next or the next magnetometer quaternion on the other hand and decreasing it if the value of the magnetometer cost function was increased

    iv. if angular rate and/or angular rate quaternion length is not above a predefined threshold performing one accelerometer step with the first weight factor for the next accelerometer quaternion and one magnetometer step with the second weight factor for the next magnetometer quaternion and mixing the results to obtain a field quaternion and using it as assumed orientation quaternion

    v. else performing one magnetometer step with the second weight factor for the next magnetometer quaternion to obtain a field quaternion and mixing it with the integrated quaternion derivative of the angular rate and using the results as assumed orientation quaternion

    vi. repeating steps ii to iv, especially at least more than two, especially more than five, times, especially going through the sequences.

First weight factors, as well as predefined high values, might differ for first and second weight or be identical, they, might be chosen freely but preferably are chosen high, e.g. in the range from 1 to 10, especially relative to the weight of the integrated quaternion derivative of the angular rate.

A three-axis gyroscope might measure the angular rate about x, y and z axes of the sensor frame, termed $\omega x$, $\omega y$ and $\omega z$ respectively. These parameters (in rads - 1) might be arranged into the vector

$$^{S}\omega = \begin{bmatrix} 0 & \omega_x & \omega_y & \omega_z \end{bmatrix}$$

the quaternion derivative describing rate of change of the earth frame relative to the sensor frame $^{S}_{E}\dot{q}$ might be calculated as

$$\frac{S}{E}\dot{q} = \frac{1}{2}\frac{S}{E}\hat{q} \otimes {}^{S}\omega$$

The $\otimes$ operate denotes a quaternion product and the " accent denotes a normalised vector of unit length.

Advantageously, the method goes through a sequence of magnetometer data and a sequence of accelerometer data. In each step a next of the sequence might be used, denoted as the next. The one prior to that, that especially was addressed prior to handling the next is then referred to as the last next. Such might be done by a running index of each sequence. For easy reading the description uses one common index for both sequences, e.g. k. k might be incremented for obtaining the next which is then addressed by k. After such increment by one the last next might be addressed by k-1.

Increasing might be done by setting it to a high value if not already set to such high value. Such high value might be predefined, e.g. as 2.0 or a value in the range of 1 to 10. Decreasing might be done by dividing it by a factor e.g. 2 or in the range of 1.5 to 8. This keeps the method easy and fast and has proven to be sufficient. As an alternative e.g. Armijo rule might be used to increase and decrease the weighting factors.

The cost functions might be defined as

$f(q,g,a)=f_a=q^* \otimes g \otimes q-a$,

$$\mathbf{f}_a = \begin{bmatrix} 0 \\ 2q_w q_y - 2q_x q_z - a_x \\ -2q_w q_x - 2q_y q_z - a_y \\ -q_w q_w + q_x q_x + q_y q_y - q_z q_z - a_z \end{bmatrix} = \begin{bmatrix} f_{a,w} \\ f_{a,x} \\ f_{a,y} \\ f_{a,z} \end{bmatrix} , \quad \mathbf{f}_a \in \mathbb{H} ,$$

If $\|\mathbf{f}_{a,k}\|-\|\mathbf{f}_{a,k-1}\| <= 0$ increase step size for the accelerometer.

$f(q,h',m')=f_m=q^* \otimes h' \otimes q-m'$.

$$\mathbf{f}_m = \begin{bmatrix} 0 \\ -2q_w q_z - 2q_x q_y - m_x \\ -q_w q_w + q_x q_x - q_y q_y + q_z q_z - m_y \\ 2q_w q_x - 2q_y q_z - m_z \end{bmatrix} = \begin{bmatrix} f_{m,w} \\ f_{m,x} \\ f_{m,y} \\ f_{m,z} \end{bmatrix} , \quad \mathbf{f}_m \in \mathbb{H} .$$

If $\|\mathbf{f}_{m,k}\|-\|\mathbf{f}_{m,k-1}\| <= 0$ increase step size for the magmetometer.

Using the notation

$\mathbf{f}_a$ is the cost function for the accelerometer
$\mathbf{q}$ is the quaternion estimate from last iteration
$\mathbf{g}$ is the gravity vector in quaternion form $\mathbf{g} = (0, 0, -1, 0)$
$\mathbf{a}$ is the accelerometer sample after applying filter and in quaternion form $\mathbf{a} = (0, a_x, a_y, a_z)$
$\otimes$ is a guternion product operator
$\mathbf{f}_m$ is the cost function for the magnetometer
$\mathbf{h}'$ is an equivalent reference vector for magnetometer calculated according to the Eq. (7) from Wilson
$\mathbf{m}'$ is an equivalent magnetometer measurement calculated according to the Eq. (6) from Wilson

In these examples the cost functions are based on and, especially given by, the difference between assumed orientation quaternion assumed orientation quaternion after later of step i and iv on the one hand and the next accelerometer/magnetometer quaternion on the other hand, meaning especially the current selected one from the sequence.

Assumed orientation quaternion after later of step i and iv especially means assumed orientation quaternion after later of step i if no step iv was performed so far and after one step iv was performed, the assumed orientation quaternion after the latest step iv.

Advantageously, the cost functions are given by the claimed difference on which they are based respectively.

In some applications it is preferred to adapt in step ii the first weight factor by setting it to zero if angular rate and/or angular rate quaternion length is equal or above a predefined threshold.

The mixing is preferably performed by use of the weighting factors. In this description the weighting factor of the integrated quaternion derivative of the angular rate is assumed to be 1. But the weighting factors might be scaled as desired, especially as it is preferred to include a normalisation of the assumed orientation quaternion.

In this description the test of whether a threshold of movement is reached is performed by a < = and > but it might as well be amended to < and > =.

Preferably, the sequence of gyroscope data is based on samples of a, especially one three-dimensional, gyroscope, especially after aggregation and/or filtering, wherein preferably the samples include three angles of rotation per sample interval.

Advantageously, the sequence of magnetometer data is based on samples of a, especially one three-dimensional, magnetometer, especially after aggregation and/or filtering, wherein preferably the samples include three values per sample interval.

Preferably, the sequence of accelerometer data is based on samples of a, especially one three-dimensional, accelerometer, especially gravitometer, especially after aggregation and/or filtering, wherein preferably the samples include three values per sample interval.

Advantageously, the method includes sampling of the sequence of gyroscope data from a three-dimensional gyroscope and the sequence of accelerometer data from a three-dimensional accelerometer, especially gravitometer, and the sequence of magnetic field data from a three-dimensional magnetometer.
wherein the magnetometer, gyroscope and accelerometer are arranged in a fixed spatial arrangement.

Even more preferably, the magnetometer, gyroscope and accelerometer are attached to a glove or an attachment to a glove or to an attachment to a body part, especially a limp. With great avail the attachment or glove features 5 to 15, sensor triples, each triple consisting of a magnetometer, gyroscope and accelerometer, especially all measuring three dimensionally. This enables detection of movement of fingers and palm, each as an estimated orientation quaternion.

Preferably, the sequence of gyroscope data, the sequence of accelerometer and the sequence of magnetometer data is provided wirelessly, especially via wifi, especially from a glove or glove attachment, wherein especially such data is only provided if movement of the glove and/or sensors is greater than a predetermined movement threshold and/or angular rate quaternion length is above a predetermined transmission threshold, which might be the same in step iii or different, and/or accelerometer/magnetometer/gyroscope change in value of two consecutive samples is greater than some threshold, which might be the equivalent to the threshold in step iii. or different. This enables reduction of power consumption, while preserving most of the accuracy of the orientation estimation. The method of the invention is accurate enough to use quite low data or sample rate and therefore such data can easily be provided wirelessly, even from a multitude of sensor triples. Data transmission rates might be in the range so that one triple value for each measurement, especially of the triple, is transmitted in the timespan of 10 to 100 ms. Sample rates of the sensors might differ and there might as well be different data transmit rates for different sensors.

Advantageously, repeatedly an updated assumed orientation quaternion is determined for a multitude of sensor triple data or sensor triples.

Assumed orientation quaternion, especially multiple assumed orientation quaternions each derived from one IMU MARG sensor set up can be used for further movement analysis. Such assumed orientation quaternions might be calculated parallelly. E.g., such IMU MARG sensors might be attached to body parts to detect their movement, e.g. finger, palm, arm, wrist, leg, and/or foot movement. Such assumed orientation quaternions related to body or body part movement might be used to recognize gestures, e.g. by use of neuronal networks. This can be used to reduce latency, especially below zero as gestures might even be recognized prior to being finished.

Further, preferable ways to carry out the invention as well as exemplary results are discussed by reference to the following figures:

Fig. 1    flow chart of an inventive method

Figs. 2    example results of the method according to Fig. 1 in comparison to Madgwick and Wilson.

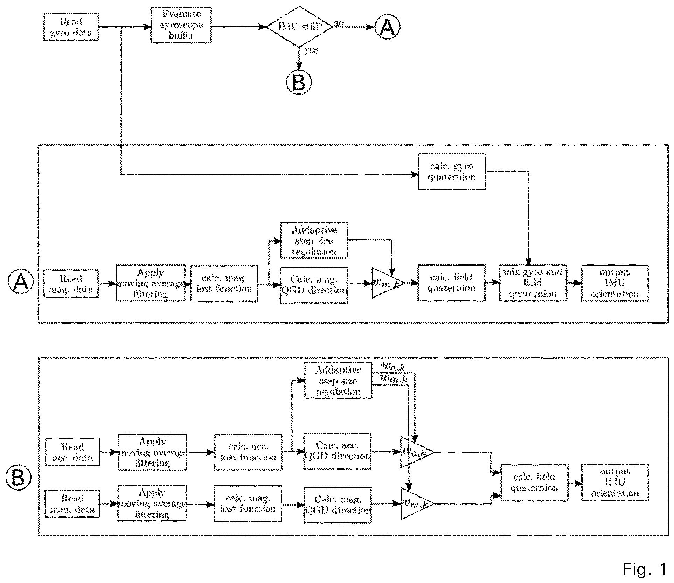

Fig. 1 shows a flow chart of a possible way to implement the invention.

It features reading of gyro data and by use of a buffer and a threshold deciding whether IMU is still (yes) or is moved (no, not still). In case of movement the method branches to case A in case of no movement to B.

In branch A, accelerometer data is discarded and only magnetometer data is used to perform a single gradient descent. Magnetometer data is flattened by using a moving average filter and the lost function for the last step is calculated. Based on this the weighting factor, here denoted as beta$_m$, is adapted and based on the weighting factor and the gradient a quaternion is calculated that is mixed with the calculated gyro quaternion, the integration of the quaternion derivative of the angular rate, to receive the output IMU orientation, the assumed orientation quaternion.

In branch B, the gyro data (the integration of the quaternion derivative of the angular rate) is assumed to be zero as no movement was detected. Magnetometer and accelerometer data are flattened by using moving average filters and the lost functions for the last step each are calculated. Based on these, the weighting factors, here denoted as beta$_m$ and beta$_a$, are adapted and based on the weighting factors and the gradients a quaternion is calculated each, which are mixed to receive the output IMU orientation, the assumed orientation quaternion.

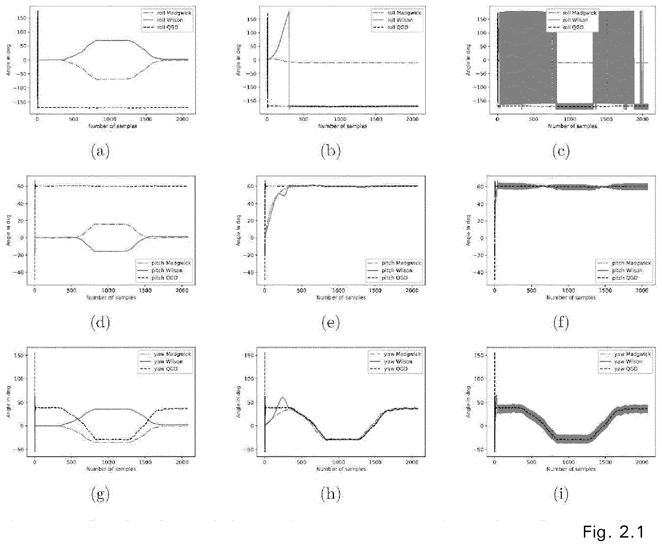

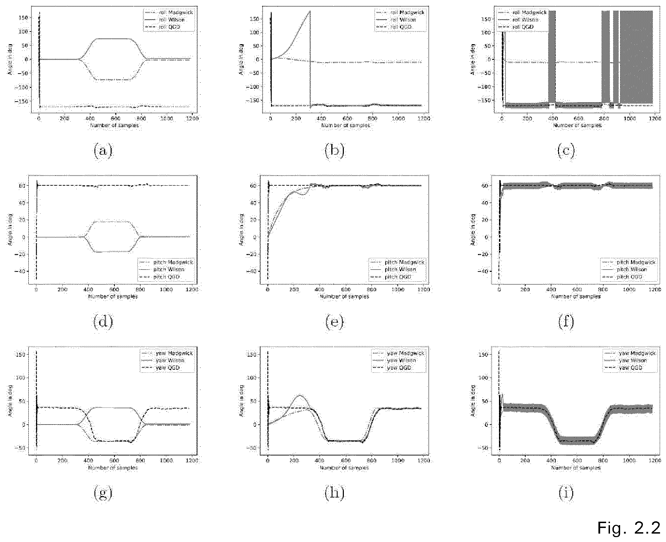

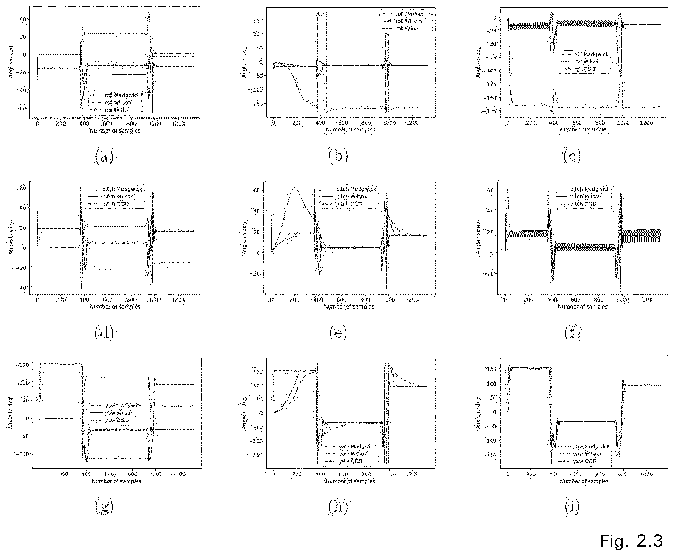

Figs. 2 show several results for different movement data and different parameters beta in the Madgwick algorithm. It can be seen that with the inventive method better orientation data can be derived, especially irrespectively of the form or intensity of movement.

Depicted are in the lines starting at the top:

Fig. 2.1 slow movement: roll (upper most), pitch (middle), and yaw (lowest) angle;

Fig. 2.2 medium movement: roll (upper most), pitch (middle), and yaw (lowest) angle;

Fig. 2.3 fast movement: roll (upper most), pitch (middle), and yaw (lowest) angle, each from left to right with beta values for Madgwick and Wilson of (left to right) 0.01, 1.0, 10.0. As high value 2.0 was used. It is to be seen that the invention allows for fast convergence and reduces overshooting.

## Claims

1. Method for IMU sensor data fusion for determining an orientation featuring

Providing an assumed orientation quaternion and a first initial weight factor ($w_{a,0}$) and a second initial weight factor ($w_{m,0}$);
providing a sequence of gyroscope data showing angular rate as angular rate quaternions;
providing a sequence of accelerometer data, especially gravitometer data, as accelerometer quaternions and a sequence of magnetometer data as magnetometer quaternions;
calculating quaternion derivative of the angular rate;
integrating quaternion derivative of the angular rate;
repeatedly determining an updated assumed orientation quaternion by solving the optimization problem to align assumed orientation quaternion with accelerometer quaternions and/or magnetometer quaternions by dual quaternion gradient descent method featuring:

i. performing one first accelerometer step with the first initial weight factor ($w_{a,0}$) for the first accelerometer quaternion and one first magnetometer step with the second initial weight factor ($w_{m,0}$) for the first magnetometer quaternion;
**characterised by**
ii. if (B) angular rate and/or angular rate quaternion length is not above a predefined threshold: for a next accelerometer quaternion increasing the first weight factor or setting it to a predefined high accelerometer value if the last accelerometer step reduced the value of an accelerometer cost function defined based on the difference between assumed orientation quaternion after last accelerometer step or assumed orientation quaternion after later of step i and iv on the one hand and last next or the next accelerometer quaternion on the other hand and decreasing it if the value of the accelerometer cost function was increased by the last accelerometer step;
iii. for a next magnetometer quaternion adapting the second weight factor by increasing it or setting it to a predefined high magnetometer value if the last magnetometer step reduced the value of a magnetometer cost function defined based on the difference between assumed orientation quaternion after last magnetometer step or assumed orientation quaternion after later of step i and iv on the one hand and last next or the next magnetometer quaternion on the other hand and decreasing it if the value of the magnetometer cost function was increased;
iv. if (B) angular rate and/or angular rate quaternion length is not above a predefined threshold performing one accelerometer step with the first weight factor for the next accelerometer quaternion and one magnetometer step with the second weight factor for the next magnetometer quaternion and mixing the results to obtain a field quaternion and using it as assumed orientation quaternion;

v. else (A) performing one magnetometer step with the second weight factor for the next magnetometer quaternion to obtain a field quaternion and mixing it with the integrated quaternion derivative of the angular rate and using the results as assumed orientation quaternion;

vi. repeating steps ii to iv, especially at least more than two times.

2. Method according to claim 1 wherein the sequence of gyroscope data is based on samples of a, especially one three-dimensional, gyroscope, especially after aggregation and/or filtering, wherein preferably the samples include three angles of rotation per sample interval and/or

wherein the sequence of magnetometer data is based on samples of a, especially one three-dimensional, magnetometer, especially after aggregation and/or filtering, wherein preferably the samples include three values per sample interval and/or

wherein the sequence of accelerometer data is based on samples of a, especially one three-dimensional, accelerometer, especially gravitometer, especially after aggregation and/or filtering, wherein preferably the samples include three values per sample interval.

3. Method according to any of the preceding claims including sampling of the sequence of gyroscope data from a three-dimensional gyroscope and the sequence of accelerometer data from a three-dimensional accelerometer, especially gravitometer, and the sequence of magnetometer data from a three-dimensional magnetometer.

4. Method according to any of the preceding claims 2 or 3, wherein the magnetometer, gyroscope and accelerometer are arranged in a fixed spatial arrangement.

5. Method according to any one of the preceding claims 2 to 4, wherein the magnetometer, gyroscope and accelerometer are attached to a glove or an attachment to a glove, wherein the attachment or glove features 5 to 15, sensor triples, each consisting of a magnetometer, gyroscope and accelerometer.

6. Method according to any of the preceding claims, wherein the sequence of gyroscope data, the sequence of accelerometer and the sequence of magnetometer data is provided wirelessly, especially via wifi, especially from a glove or glove attachment according to claim 5, wherein especially such data is only provided if movement of the glove and/or sensors is greater than a predetermined movement threshold and/or angular rate quaternion length is above a predetermined transmission threshold.

7. Method according to any of the preceding claims wherein in step ii adapting the first weight factor by setting it to zero if angular rate and/or angular rate quaternion length is equal or above a predefined threshold.

8. Method according to any of the preceding claims wherein repeatedly an updated assumed orientation quaternion is determined for a multitude of sensor triple data or sensor triples.

Fig. 1

Fig. 2.1

EP 4 312 001 A1

Fig. 2.2

10

Fig. 2.3

Europäisches
Patentamt

European
Patent Office

Office européen
des brevets

# EUROPEAN SEARCH REPORT

**Application Number**

EP 22 18 7335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/363460 A1 (SARBISHEI OMID [CA]) 15 December 2016 (2016-12-15) * paragraphs [0010], [0011], [0014] – [0016], [0051], [0058] – [0061], [0101] * | 1-8 | INV. G01C21/16 G01C25/00 |
| A | MADGWICK S O H ET AL: "Estimation of IMU and MARG orientation using a gradient descent algorithm", REHABILITATION ROBOTICS (ICORR), 2011 IEEE INTERNATIONAL CONFERENCE ON, IEEE, 29 June 2011 (2011-06-29), pages 1-7, XP032318422, DOI: 10.1109/ICORR.2011.5975346 ISBN: 978-1-4244-9863-5 * the whole document * | 1-8 | |
| | | | TECHNICAL FIELDS SEARCHED (IPC) |
| | | | G01C |

The present search report has been drawn up for all claims

| Place of search | Date of completion of the search | Examiner |
|---|---|---|
| The Hague | 21 January 2023 | Nikoli, Revekka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 7335

21-01-2023

| Patent document cited in search report | | Publication date | Patent family member(s) | | Publication date |
|---|---|---|---|---|---|
| US 2016363460 | A1 | 15-12-2016 | CA | 2932782 A1 | 12-12-2016 |
| | | | US | 2016363460 A1 | 15-12-2016 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110307213 A1
- US 20160327396 A1
- DE 102015111506 A1
- US 9529433 B2
- US 20160266645 A1

**Non-patent literature cited in the description**

- **SEBASTIAN O.H. MADGWICK ; ANDREW J.L. HARRISON ; RAVI VAIDYANATHAN.** Estimation of IMU and MARG orientation using a gradient descent algorithm. *IEEE 978-1-4244-9862-8/11, Rehab Week Zurich, ETH Zurich Science City*
- **SAMUEL WILSON ; HENRY EBERLE ; YOSHIKATSU HAYASHI ; SEBASTIAN O.H. MADGWICK.** *Formulation of a new gradient descent MARG orientation algorithm: Case study on robot teleoperation*
- **MARCEL ADMIRAAL ; SAMUEL WILSON ; RAVI VAIDYANATHAN.** Improved Formulation of the IMU and MARG Orientation Gradient Descent Algorithm for Motion Tracking in Human-Machine Interfaces. *IEEE 978-1-5090-6064-1/17, 2017 IEEE International Conference on Multisensor Fusion and Integration for Intelligent Systems (MFI 2017),* 16 November 2017
- **DONGPO XU ; DANILO P. MANDIC.** Quaternion Gradient and Hessian. *arXiv:1406.3587v1 [math.NA,* 13 June 2014